# FASCICULE DE BREVET EUROPEEN

(11) **EP 2 538 665 B1**
(45) Date de publication et mention de la délivrance du brevet: **23.04.2014**
(21) Numéro de dépôt: 12171972.8
(22) Date de dépôt: 14.06.2012
(51) Int. Cl.: H04N 5/3745, H04N 5/345, G01W 1/16

(54) **Detecteur a fonction d'imagerie selective et procédé de detection d'eclairs**
Bildaufnehmer mit selektiver Bilderfassung und Verfahren zur Erkennung von Blitzen.
Detector with a selective imaging function and method for lightning detection

(30) Priorité: 21.06.2011 FR 1101910
(43) Date de publication de la demande: 26.12.2012
(73) Titulaire: ASTRIUM SAS, 92150 Suresnes (FR)
(72) Inventeur: Tulet, Michel, 31130 BALMA (FR); Saint-Pe, Olivier, 31520 RAMONVILLE SAINT AGNE (FR); Breart de Boisanger, Michel Yves Marie, 31400 Toulouse (FR); Pasternak, Frédéric, 31590 GAURE (FR)
(74) Mandataire: Cabinet Plasseraud

(56) Documents cités:
- MEHDI HABIBI: "A low power smart CMOS image sensor for surveillance applications", MACHINE VISION AND IMAGE PROCESSING (MVIP), 2010 6TH IRANIAN, IEEE, 27 octobre 2010 (2010-10-27), pages 1-4, XP031957084, DOI: 10.1109/IRANIANMVIP.2010.5941166 ISBN: 978-1-4244-9706-5
- LEONARDO TOMMASI, GIUSEPPE BASILE, ANDREA ROMOLI, MORENO STAGI: "Design and performance of the lightning imager for the meteosat third generation.", SIXTH INTERNATIONAL CONFERENCE ON SPACE OPTICS, PROCEEDINGS OF ESA/CNES ICSO 2006, 27 juin 2006 (2006-06-27), XP002670551, Noordwijck, the Netherlands
- JOHAN LEIJTENS ET AL: "Smart FPA's: are they worth the effort?", PROCEEDINGS OF SPIE, vol. 6361, 1 janvier 2006 (2006-01-01), pages 636115-636115-9, XP055020158, ISSN: 0277-786X, DOI: 10.1117/12.684594
- CHI Y M ET AL: "CMOS Camera With In-Pixel Temporal Change Detection and ADC", IEEE JOURNAL OF SOLID-STATE CIRCUITS, IEEE SERVICE CENTER, PISCATAWAY, NJ, USA, vol. 42, no. 10, 1 octobre 2007 (2007-10-01), pages 2187-2196, XP011193056, ISSN: 0018-9200, DOI: 10.1109/JSSC.2007.905295
- ZHENGMING FU ET AL: "A 1.2mW CMOS temporal-difference image sensor for sensor networks", CIRCUITS AND SYSTEMS, 2008. ISCAS 2008. IEEE INTERNATIONAL SYMPOSIUM ON, IEEE, PISCATAWAY, NJ, USA, 18 mai 2008 (2008-05-18), pages 1064-1067, XP031392160, DOI: 10.1109/ISCAS.2008.4541605 ISBN: 978-1-4244-1683-7
- JAEHYUK CHOI ET AL: "A Spatial-Temporal Multiresolution CMOS Image Sensor With Adaptive Frame Rates for Tracking the Moving Objects in Region-of-Interest and Suppressing Motion Blur", IEEE JOURNAL OF SOLID-STATE CIRCUITS, IEEE SERVICE CENTER, PISCATAWAY, NJ, USA, vol. 42, no. 12, 1 décembre 2007 (2007-12-01), pages 2978-2989, XP011197041, ISSN: 0018-9200, DOI: 10.1109/JSSC.2007.908716

## Description

La présente invention concerne un détecteur à fonction d'imagerie sélective, ainsi qu'un procédé de détection d'éclairs.

Certaines applications consistent à surveiller optiquement la survenue d'évènements aléatoires, et à recueillir des informations sur ces évènements, telles que leurs intensités lumineuses. Or les évènements peuvent se produire par salves, c'est-à-dire ne pas exister pendant des périodes de temps de durées aléatoires, puis se produire à intervalles de temps rapprochés, voire très rapprochés. Eventuellement, plusieurs évènements distincts peuvent intervenir simultanément, à des endroits différents du champ de surveillance. Des difficultés supplémentaires peuvent en outre provenir des situations suivantes :
- chaque événement peut être très court, nécessitant une fréquence de saisie d'images successives, appelée fréquence de trame, qui soit élevée ;
- chaque évènement peut se produire dans une partie très petite du champ de surveillance, nécessitant une résolution spatiale d'image qui soit élevée ;
- un événement peut présenter un contraste d'intensité lumineuse très variable, qui peut notamment être faible, par rapport à un arrière-plan du champ de surveillance ; et
- des motifs peuvent apparaître dans le champ de surveillance, qui ont des aspects similaires à ceux des évènements qui sont recherchés. De tels motifs sont alors susceptibles d'aboutir à une probabilité de fausse détection qui soit importante, et d'altérer un résultat de la surveillance.

Dans le jargon de l'Homme du métier, la probabilité de fausse détection caractérise la probabilité pour qu'un résultat positif de détection d'un événement ne corresponde pas à un événement qui se soit réellement produit.

Or pour une fonction d'imagerie, une résolution spatiale d'image qui est élevée correspond à un flux important de données d'image à traiter. Mais un tel flux est incompatible avec une fréquence de trame qui est elle-même élevée, pour les méthodes d'imagerie qui sont utilisées couramment.

De telles exigences interviennent notamment pour une application de détection des éclairs qui se produisent dans l'atmosphère terrestre, lorsque cette détection est réalisée optiquement en utilisant un dispositif d'imagerie qui est embarqué à bord d'un satellite, notamment d'un satellite géostationnaire. En effet, si le champ de surveillance contient toute la partie de la surface de la Terre qui est tournée vers le satellite géostationnaire, il correspond à un champ d'observation statique de 17,4° (degré) x 17,4°. Or un éclair qui est vu depuis ce satellite apparaît comme une tache lumineuse d'environ 8 km (kilomètre) de diamètre sur Terre, et correspond à une épaisseur angulaire de 0,022° environ à partir du satellite.

En outre, un éclair produit en général plusieurs impulsions optiques, avec une durée typique de chaque impulsion qui est d'environ 800 µs (microseconde) à quelques millisecondes, et la durée moyenne à mi-amplitude d'intensité lumineuse de chaque impulsion est de l'ordre de 400 µs.

Par ailleurs, les éclairs peuvent se produire de jour ou de nuit. En condition de jour, ils apparaissent sur un arrière-plan de nuages qui sont clairs lorsqu'ils sont observés depuis l'espace. A l'inverse, les éclairs apparaissent sur fond noir lorsqu'ils sont observés en condition de nuit.

Enfin, certains nuages, ou bien des zones de la surface de la Terre où se produisent des réflexions spéculaires, telles que des surfaces liquides calmes ou des portions de banquise, peuvent apparaître momentanément très brillants. Ils peuvent alors être confondus avec un éclair, contribuant ainsi à accroître la valeur de la probabilité de fausse détection. En fait, le contraste réduit que peut avoir un éclair par rapport à un arrière-plan nuageux qui est lui-même éclairé par le soleil, peut conduire à adopter un seuil de détection très bas, provoquant ensuite une valeur élevée pour la probabilité de fausse détection.

Le document de M. Habibi intitulé «A low power smart CMOS image sensor for surveillance applications», Machine Vision and Image Processing, 2010 6th Iranian. IEEE, 27 october 2010, pp. 1-4, décrit un détecteur d'image dans lequel chaque élément de détection de point d'image est pourvu d'un système détecteur de la variation du point d'image, et présente une sortie analogique et une sortie numérique.

Les documents suivants décrivent d'autres détecteurs d'images :
- «CMOS Camera with in-pixel temporal change detection and ADC», de Chi et al, IEEE Journal of Solid-State Circuits, IEEE Service Center, Piscataway, NJ, USA, vol. 42, n° 10, 1 octobre 2007, pp. 2187-2196 ; et
- «Smart FPA's : are they worth the effort ?», de Leijtens et al, Proceedings of SPIE, vol. 6361, 1 janvier 2006, pp. 636115-636115-9.

Le document de Tommasi et al. qui est intitulé «Design and performance of the ligthning imager for the meteosat third generation», Sixth International Conference on Space Optics, Proceedings of ESA/CNES ICSO 2006, 27 juin 2006, divulgue l'application à la détection depuis l'espace d'éclairs dans l'atmosphère terrestre.

Un but de la présente invention consiste alors à détecter des évènements lumineux avec un compromis qui soit amélioré par rapport aux critères d'imagerie suivants : des valeurs élevées à la fois pour la résolution spatiale de détection et pour la fréquence de trame, une valeur élevée pour la probabilité de détection malgré un contraste d'intensité des évènements qui est variable par rapport à l'arrière-plan d'image, et une valeur réduite de la probabilité de fausse détection.

D'autres buts de l'invention concernent le coût et le poids du dispositif. En particulier, son poids doit être réduit pour une application spatiale.

Pour atteindre ces objectifs et d'autres, l'invention propose un détecteur à fonction d'imagerie sélective, qui comprend :
- un capteur d'image, comprenant lui-même un ensemble d'éléments de détection de points d'image («pixel» en anglais) qui sont disposés à des intersections de lignes et de colonnes d'une matrice du capteur d'image ;
- une unité de commande, qui est adaptée pour contrôler un fonctionnement du capteur d'image selon un mode continu de lecture ligne-à-ligne, ou «rolling mode» en anglais ;
- des entrées de sélection de fenêtres ; et
- des sorties numérique et analogique.

Chaque élément de détection de point d'image comprend les composants suivants, à l'intérieur du capteur d'image et séparément des autres éléments de détection de points d'image :
- un composant photosensible, adapté pour accumuler un signal électrique pendant une durée d'intégration en fonction d'une intensité lumineuse qui est reçue par ce composant photosensible ;
- au moins une mémoire analogique, adaptée pour mémoriser le signal électrique qui est accumulé par le composant photosensible ;
- un système de soustraction, agencé pour produire un signal différentiel correspondant à une différence entre deux signaux électriques qui ont été accumulés par le composant photosensible pendant deux durées d'intégration successives ;

- un système comparateur, qui est adapté pour comparer le signal différentiel avec un seuil de détection, et pour produire un résultat binaire de détection d'événement ; et
- une mémoire de sortie, qui est adaptée pour stocker le résultat binaire de détection d'événement.

Selon des premières caractéristiques de l'invention, un tel détecteur selon l'invention est adapté pour balayer successivement toutes les lignes de la matrice du capteur d'image selon une fréquence de trame qui est supérieure ou égale à 2 kHz (kilohertz), et ceci lorsque la matrice comprend au moins 1000 lignes et au moins 1000 colonnes d'éléments de détection de points d'image.

Selon des deuxièmes caractéristiques de l'invention, l'unité de commande est adaptée pour lire les mémoires de sortie de certains au moins des éléments de détection de points d'image qui appartiennent à une même ligne de la matrice du capteur d'image, successivement pour chaque ligne. Elle détermine alors, lorsqu'au moins un résultat binaire de détection d'évènement est positif pour l'un des éléments de détection de points d'image de cette ligne, la colonne de la matrice du capteur d'image à laquelle appartient cet élément au résultat positif. Des codes qui sont utilisés pour caractériser la colonne et la ligne dans la matrice du capteur d'image forment une donnée numérique d'évènement qui est transmise par la sortie numérique.

Selon des troisièmes caractéristiques de l'invention, l'unité de commande est adaptée en outre pour lire la mémoire analogique de certains au moins des éléments de détection de points d'image qui appartiennent à une fenêtre sélectionnée dans la matrice du capteur d'image au moyen de coordonnées reçues par les entrées de sélection de fenêtres. L'unité de commande transmet alors les signaux électriques qui ont été ainsi accumulés, mémorisés puis lus par la sortie analogique.

Ainsi, un détecteur selon l'invention possède deux voies distinctes de production de données d'image : une voie numérique et une voie analogique.

La voie numérique produit des données numériques d'événements, qui correspondent aux coordonnées d'éléments de détection de points d'image auxquels les évènements ont été détectés. Cette détection procède par différences entre les signaux qui sont accumulés pour deux trames d'image successives. De cette façon, un évènement lumineux dont l'apparition est subite peut être détecté efficacement par rapport à une intensité d'arrière-plan qui varie plus lentement. En outre, ces opérations de différence sont réalisées d'une façon intégrée aux éléments de détection de points d'image. Elles sont donc réalisées en parallèle pour tous les éléments de détection de points d'image à l'intérieur de chaque ligne de la matrice, aboutissant ainsi à un temps apparent de traitement des signaux accumulés qui est réduit au maximum.

La voie analogique produit des données d'image qui sont limitées à l'intérieur de fenêtres sélectionnées. De cette façon, la quantité de données d'image qui sont extraites du détecteur puis traitées peut être limitée uniquement aux parties qui présentent un intérêt à l'intérieur de chaque image totale qui est saisie par l'ensemble du capteur. Une telle fonction d'imagerie sélective contribue à l'obtention de valeurs élevées simultanément pour la résolution spatiale et la fréquence de trame.

En outre, le fonctionnement du détecteur en mode continu de lecture ligne-à-ligne permet une surveillance permanente de la survenue des évènements, bien que ceux-ci apparaissent aléatoirement.

Selon des quatrièmes caractéristiques de l'invention, l'unité de commande comprend en outre un module de filtrage, qui est agencé pour filtrer spatialement les résultats binaires de détection d'évènements à l'intérieur d'un sous-ensemble de plusieurs lignes adjacentes dans la matrice du capteur d'image et comprenant la ligne en cours de lecture. La colonne dont le code contribue à la donnée numérique d'événement qui est transmise par la sortie numérique est alors déterminée à partir des résultats binaires de détection d'évènements filtrés. Un tel filtrage spatial qui est effectué lors de la lecture de chaque ligne de matrice en mode «rolling» contribue à réduire plus la valeur de probabilité de fausse détection. En outre, il s'agit d'un filtrage numérique qui est effectué sur des valeurs binaires. Son exécution peut donc être particulièrement rapide.

Selon un premier perfectionnement possible de l'invention, l'unité de commande peut être adaptée en outre pour déterminer uniquement les colonnes respectives d'un premier et d'un dernier élément de détection de point d'image aux résultats positifs de détection d'évènement, selon deux ordres de lecture des éléments de détection de points d'image dans chaque ligne qui sont opposés. La donnée numérique d'évènement est ainsi particulièrement réduite, si bien que sa durée de traitement peut être très courte. Une telle donnée numérique d'évènement contribue à l'obtention d'une fréquence de trame qui soit encore plus élevée.

Selon un deuxième perfectionnement possible de l'invention, le détecteur peut être adapté en outre pour mesurer pendant le fonctionnement en mode continu de lecture ligne-à-ligne, une intensité d'un fond d'image à partir de lectures des mémoires analogiques de certains au moins des éléments de détection de points d'image. Pour cela, des mesures de fond d'image qui forment un échantillonnage représentatif de toute la matrice du capteur d'image peuvent être répétées avec une fréquence d'actualisation de fond d'image qui est inférieure à un centième ou moins d'une fréquence de balayage de toutes les lignes de la matrice selon le mode continu de lecture ligne-à-ligne. De cette façon, la fréquence de trame n'est pas sensiblement réduite par la tâche de fond, et une information est en outre fournie sur l'arrière-plan du champ d'observation dans lequel les évènements sont détectés. De préférence, la fréquence d'actualisation de fond d'image peut être supérieure ou égale à 0,5 Hz.

L'invention propose aussi un dispositif d'imagerie sélective qui comprend :
- un détecteur à fonction d'imagerie sélective tel que décrit précédemment ; et
- une unité de traitement en temps réel de données d'image, qui est connectée en entrée à la sortie numérique du détecteur à fonction d'imagerie sélective, et en sortie aux entrées de sélection de fenêtres de ce détecteur.

L'unité de traitement en temps réel est alors adaptée pour exécuter les opérations suivantes en temps réel par rapport au fonctionnement en mode continu de lecture ligne-à-ligne du détecteur à fonction d'imagerie sélective :
- recevoir des données numériques d'événements à partir de la sortie numérique du détecteur à fonction d'imagerie sélective ;
- filtrer ces données numériques d'évènements reçues ;
- déterminer des fenêtres à partir des données numériques d'évènements, de sorte que chaque fenêtre contienne des éléments de détection de points d'image aux résultats positifs de détection d'évènement, qui appartiennent à des segments de lignes adjacents entre eux dans la matrice du capteur d'image ; et
- transmettre les coordonnées des fenêtres aux entrées de sélection de fenêtres du détecteur à fonction d'imagerie sélective, pour les données numériques d'évènements filtrées.

Ainsi, les données numériques d'événements qui sont produites par la voie numérique du détecteur, sont utilisées pour déterminer les fenêtres d'imagerie de la voie analogique. En outre, un filtrage intermédiaire des évènements détectés est réalisé, pour réduire encore la valeur de probabilité de fausse détection.

De préférence, l'unité de traitement en temps réel peut être adaptée pour filtrer les données numériques d'événements reçues selon l'un au moins des critères suivants :
/i/ une donnée numérique d'événement est validée si elle contient un nombre d'éléments de détection de points d'image qui sont identifiés comme étant défectueux, inférieur à une limite maximale, sinon la donnée numérique d'évènement est abandonnée ;
/ii/ une donnée numérique d'évènement est validée si elle ne contient pas d'éléments de détection de points d'image qui ont détecté antérieurement un contenu d'image répertorié comme étant un contenu parasite, sinon la donnée numérique d'événement est abandonnée ;
/iii/ une donnée numérique d'évènement est validée si le nombre de données numériques d'évènements qui sont obtenues pour une zone de la matrice à laquelle correspond cette donnée numérique d'évènement, et qui sont obtenues pour une même séquence du balayage des lignes de la matrice dans le fonctionnement continu de lecture ligne-à-ligne, ne dépasse pas un nombre maximal fixé pour cette zone de matrice, sinon la donnée numérique d'évènement est abandonnée ;
/iv/ déclarer un nouvel évènement pour chaque fenêtre qui est déterminée pour une nouvelle séquence du balayage des lignes de la matrice dans le fonctionnement en mode continu de lecture ligne-à-ligne, et qui ne présente pas de recouvrement avec une fenêtre déterminée lors de la séquence précédente de balayage, et relier une nouvelle donnée numérique d'évènement qui participe à la fenêtre sans recouvrement au nouvel événement ; et
/v/ relier une nouvelle donnée numérique d'évènement à un évènement déjà déclaré, si cette nouvelle donnée numérique d'évènement correspond à au moins un élément de détection de point d'image qui appartient à la fenêtre déterminée lors de la séquence précédente de balayage des lignes de la matrice dans le fonctionnement en mode continu de lecture ligne-à-ligne, pour l'évènement déjà déclaré.

Le critère de filtrage /i/ assure que d'éventuelles zones défectueuses de la matrice, qui peuvent n'être que des éléments isolés de détection de points d'image, et qui pourraient produire à chaque trame des résultats binaires de détection systématiquement positifs, ne provoquent aucune augmentation de la valeur de probabilité de fausse détection.

Le critère de filtrage /ii/ évite que des contenus particuliers d'image qui ont déjà été identifiés comme des contenus parasites présents dans le champ d'observation lors de trames antérieures, ne soient comptabilisés comme des évènements d'intérêt.

Le critère de filtrage /iii/ évite qu'un grand nombre de données numériques d'évènements qui sont concentrées dans une même zone de la matrice ne sature la capacité de traitement du dispositif d'imagerie sélective.

Les critères de filtrage /iv/ et /v/ assurent qu'un même évènement réel qui est détecté dans plusieurs trames successives à cause de sa durée plus longue, ne soit pas comptabilisé comme plusieurs évènements distincts.

Lorsque l'intensité de fond d'image est mesurée par le détecteur à fonction d'imagerie sélective, le dispositif peut comprendre en outre une unité de traitement différé de données d'image. Une telle unité de traitement différé est connectée en entrée d'une part à l'unité de traitement en temps réel pour recevoir les coordonnées de fenêtres, et d'autre part à la sortie analogique du dispositif à fonction d'imagerie sélective. L'unité de traitement différé peut alors être adaptée pour soustraire, pour chaque élément de détection de point d'image qui appartient à une fenêtre, une intensité de fond d'image au signal électrique accumulé pour l'élément de détection de point d'image. De cette façon, une intensité élémentaire d'évènement est obtenue, qui est relative à l'élément de détection de point d'image.

L'unité de traitement différé peut être adaptée en outre pour exécuter les opérations suivantes pour chaque évènement déclaré :
- sommer les intensités élémentaires d'évènement qui ont été obtenues pour tous les éléments de détection de points d'image qui appartiennent aux fenêtres de cet évènement déclaré, et pour les séquences successives de balayage des lignes de la matrice dans le fonctionnement en mode continu de lecture ligne-à-ligne, de façon à obtenir une intensité totale d'événement ; et
- comparer cette intensité totale d'évènement à un seuil de sélection, de façon à sélectionner l'évènement si son intensité totale d'événement est supérieure au seuil de sélection, et sinon à rejeter l'évènement.

Un tel filtrage supplémentaire des évènements d'après leurs intensités totales respectives peut ainsi être réalisé. Il contribue à réduire encore la valeur de probabilité de fausse détection. Dans ce cas, le dispositif peut former un dispositif de détection d'éclairs.

Pour cette application en particulier, le capteur d'image peut être sensible pour un rayonnement ayant une longueur d'onde qui est comprise entre 0,6 µm et 1 µm (micromètre). De préférence, il peut être sensible pour une longueur d'onde égale ou proche de 777,4 nm (nanomètre), qui correspond à un maximum d'intensité spectrale pour les impulsions optiques d'éclairs.

Enfin, l'invention propose encore un procédé de détection d'éclairs qui comprend les étapes suivantes :
- embarquer un dispositif d'imagerie sélective selon l'invention, et adapté pour la détection des éclairs, à bord d'un satellite terrestre ;
- orienter un champ d'observation du dispositif vers une partie d'atmosphère terrestre, sorte que le capteur d'image reçoive un rayonnement qui est produit par un éclair survenant dans cette partie d'atmosphère terrestre ; et
- activer le dispositif d'imagerie sélective de sorte que l'éclair provoque un événement sélectionné par l'unité de traitement différé.

D'autres particularités et avantages de la présente invention apparaîtront dans la description ci-après d'exemples de réalisation non limitatifs, en référence aux dessins annexés, dans lesquels :
- la figure 1 est un schéma général d'un dispositif d'imagerie sélective conforme à l'invention ;
- la figure 2 est un schéma synoptique détaillé correspondant à la figure 1 ;
- la figure 3 est un schéma synoptique des fonctions qui sont intégrées à chaque élément de détection de point d'image, dans le dispositif des figures 1 et 2 ; et
- la figure 4 illustre une application d'un dispositif conforme à la présente invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

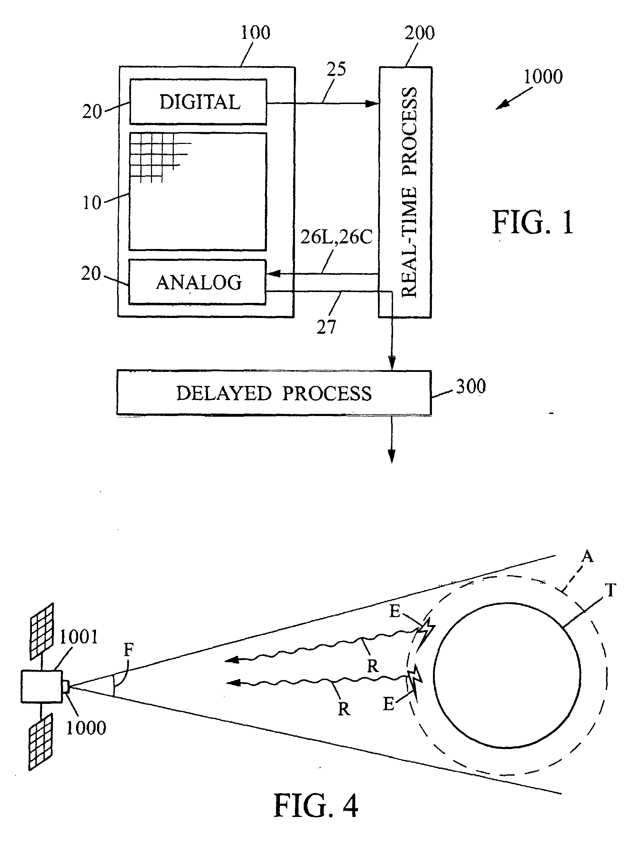

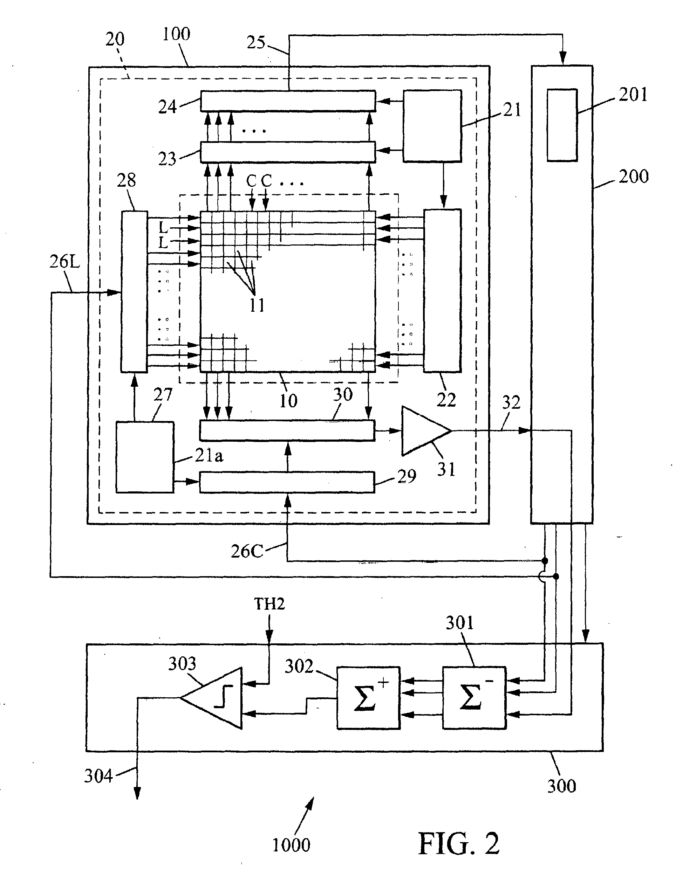

Conformément aux figures 1 et 2, un dispositif d'imagerie sélective qui est désigné globalement par la référence 1000, comprend un détecteur à fonction d'imagerie sélective 100, une unité de traitement en temps réel de données d'image 200, et une unité de traitement différé de données d'image 300. Comme il ressortira de la description ci-après, l'invention concerne notamment le détecteur 100 en tant qu'élément séparé des unités 200 et 300. En effet, le détecteur 100 constitue par lui-même une invention, bien qu'il soit représenté dans ces deux figures en liaison avec les unités 200 et 300.

Le détecteur à fonction d'imagerie sélective 100 comprend lui-même un capteur d'image 10 et une unité de commande 20. De façon connue, le capteur 10 et l'unité de commande 20 sont avantageusement réalisés sur un même substrat de circuit CMOS. Les unités 200 et 300 de traitement de données d'image, respectivement en temps réel et en temps différé, peuvent être réalisées sous forme d'un ou deux circuits qui sont séparés de celui du détecteur 100. De préférence, les unités 200 et 300 sont aussi réalisées sur des substrats de circuits respectifs qui sont séparés.

Le capteur d'image 10 comprend une matrice d'éléments de détection de points d'image 11, qui sont disposés aux intersections de lignes L et de colonnes C dans une portion de surface exposée. Par exemple, le capteur d'image 10 comprend 1000 lignes L et 1000 colonnes C d'éléments de détection de points d'image 11. Les lignes L et les colonnes C peuvent avoir chacune une largeur de 50 µm (micromètre), si bien que la surface utile de détection du capteur d'image 10 peut posséder les dimensions 50 mm (millimètre) x 50 mm.

Le dispositif 1000 peut être associé à une optique de formation d'image (non représentée), qui est agencée pour former une image d'un champ d'observation sur la surface exposée de détection du capteur 10. Par exemple, l'optique de formation d'image peut avoir une longueur de distance focale adaptée pour que chaque élément de détection de point d'image corresponde à une longueur de 4 km (kilomètre) pour une distance d'observation de 36 000 km. De telles conditions d'utilisation correspondent à un dispositif selon l'invention qui est embarqué à bord d'un satellite géostationnaire, et orienté pour observer la surface de la Terre.

L'unité de commande 20 est adaptée pour contrôler un fonctionnement du détecteur 100 en mode «rolling», ou mode continu de lecture ligne-à-ligne. Un tel mode de saisie d'image est connu de l'Homme du métier, si bien qu'il est suffisant de n'en rappeler que le principe ici. Les lignes L d'éléments de détection de points d'image 11 sont lues successivement une-à-une, en étant reprises selon un balayage périodique de toutes les lignes de la matrice du capteur d'image 10. Chaque balayage de toute la matrice définit une trame d'image, et un détecteur 100 conforme à la description détaillée qui suit est adapté pour produire et traiter les trames d'image à une fréquence de trame supérieure ou égale à 2 kHz (kilohertz), par exemple de l'ordre de 4 kHz.

Pour l'invention, chaque élément de détection de point d'image 11 comporte, en plus du composant photosensible, des composants CMOS additionnels qui réalisent des opérations élémentaires à partir du signal électrique d'accumulation qui est produit par le composant photosensible. Le résultat de ces opérations est de nature binaire. Ce mode opératoire permet de réduire la quantité d'information d'image qui est manipulée pour chaque trame, afin d'atteindre des valeurs élevées pour la fréquence de production et de traitement des trames. La nature numérique («digital» en anglais) des données d'image qui sont ensuite transmises à l'unité de traitement en temps réel 200 contribue aussi à l'obtention de cette fréquence élevée.

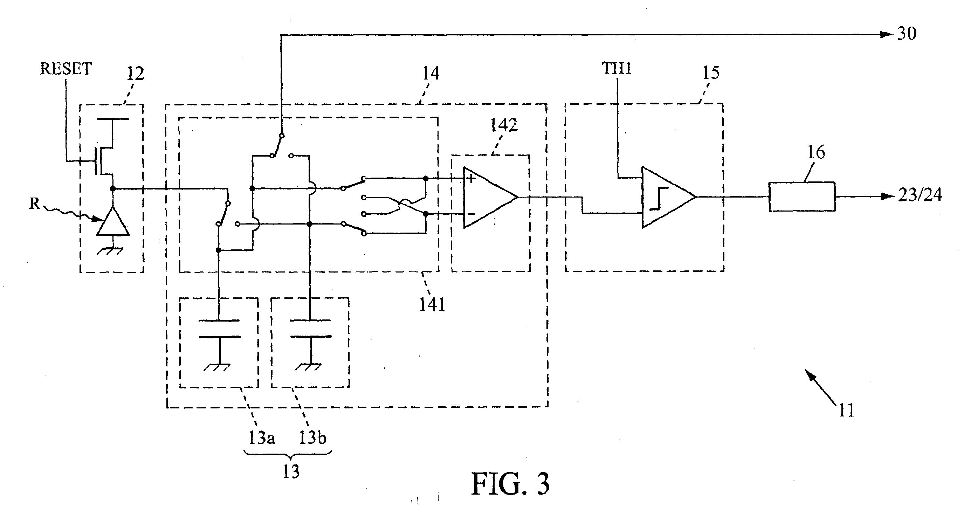

La figure 3 illustre l'enchaînement de ces opérations élémentaires qui sont réalisées au sein de chaque élément de détection de point d'image 11, pour chaque trame produite. Pour un fonctionnement de base de l'invention, chaque élément 11 comporte individuellement les éléments fonctionnels suivants :
- le composant photosensible qui est référencé 12, y compris son circuit de réinitialisation noté «RESET», et qui produit un signal électrique d'accumulation proportionnel à l'intensité de rayonnement qu'il a reçue pendant une durée d'intégration ;
- une mémoire analogique 13, qui mémorise le signal électrique accumulé pour chaque trame acquise ;
- un système de soustraction 14, qui réalise une soustraction entre le signal électrique d'accumulation pour la trame en cours d'acquisition, et celui de la trame précédente afin de produire un signal différentiel ;
- un système comparateur 15, qui compare le signal différentiel produit par le système de soustraction 14 avec un seuil fixe, noté TH1 pour «threshold» en anglais, pour produire un résultat binaire de comparaison appelé résultat de détection d'évènement ; et
- une mémoire de sortie 16 de l'élément de détection de point d'image 11, pour stocker le résultat binaire de détection d'évènement jusqu'à sa lecture par l'unité de commande 20.

Le composant photosensible 12 peut être notamment une photodiode. Dans un mode de réalisation adapté à l'application de détection d'éclairs, il peut être sensible pour un rayonnement de longueur d'onde comprise entre 0,6 µm (micromètre) et 1 µm.

Les signaux qui sont transmis entre le composant photosensible 12 et le système de soustraction 14, et qui sont mémorisés dans la mémoire 13, ainsi les signaux qui sont transmis entre le système 14 et le système comparateur 15 sont de nature analogique. Par opposition, le signal qui est produit par le système 15 et stocké dans la mémoire de sortie 16, est binaire. Ce signal de sortie d'élément de détection de point d'image correspond au résultat binaire de détection d'évènement pour chaque nouvelle trame. Il est égal à 1 lorsque l'intensité lumineuse reçue a varié d'une quantité supérieure au seuil fixé TH1 entre deux trames successives, et égal à zéro si cette variation est inférieure au seuil TH1. Autrement dit, le signal binaire qui est stocké dans la mémoire 16 est un indicateur de variation ou d'absence de variation significative pour le point d'image entre deux trames successives.

La figure 3 montre une réalisation possible du système de soustraction 14. Selon cette réalisation, le système 14 peut comprendre deux mémoires de rétention 13a et 13b, du type échantillonnage-blocage ou «sample and hold» en anglais, un multiplexeur 141, et l'opérateur soustracteur 142 lui-même. Le signal électrique d'accumulation est stocké dans l'une ou l'autre des mémoires 13a et 13b, en alternance pour des trames successives, puis ces signaux stockés sont transmis aux entrées de l'opérateur soustracteur 142. Cette transmission est réalisée par le multiplexeur 141 en inversant les connexions d'entrée aux deux mémoires 13a et 13b, ainsi que les connexions entre ces mémoires 13a, 13b et les deux entrées de l'opérateur 141, entre deux trames successives. De cette façon, une soustraction est obtenue de façon glissante entre chaque trame et sa trame juste précédente, en minimisant les manipulations de signaux analogiques.

D'autres réalisations du système de soustraction 14 peuvent être utilisées alternativement.

Pour la réalisation du système qui vient d'être décrite, et selon une combinaison avantageuse, les mémoires de rétention 13a et 13b peuvent aussi constituer la mémoire analogique 13. Pour cela, le multiplexeur 141 établit simultanément une connexion de lecture de l'une ou l'autre des mémoires 13a et 13b, qui est aussi inversée entre deux trames successives. Ainsi, la mémoire 13 constitue une première sortie de l'élément de détection de point d'image 11, qui est du nature analogique.

La mémoire de sortie 16 peut être du type à verrouillage, ou «latch» en anglais. Elle constitue une seconde sortie de l'élément de détection de point d'image 11, qui est de nature binaire.

Lors de la séquence de lecture d'une ligne L en mode «rolling», l'unité de commande 20 parcourt les mémoires de sortie 16 de certains au moins des éléments 11 de cette ligne, et identifie certains de ceux-ci pour lesquels le résultat binaire de détection d'évènement est positif. Autrement dit, l'unité 20 détermine certaines des colonnes C pour lesquelles une variation suffisante du contenu d'image a été détectée entre les deux expositions précédentes, à l'intérieur de la ligne L en cours de lecture. Le résultat de cette lecture qui est réalisée par l'unité 20 est formé de codes, ou adresses, qui caractérisent la ligne L et la colonne C concernées, respectivement parmi toutes les lignes et colonnes de la matrice. Il est appelé donnée numérique d'évènement dans la présente description.

De préférence, le mode de lecture qui est mis en oeuvre à l'intérieur de chaque ligne L est celui connu sous l'acronyme FIL & LIL pour «first in line and last in line» en anglais. Pour cela, l'unité de commande 20 détermine uniquement les colonnes C respectives d'un premier et d'un dernier élément de détection de point d'image 11 aux résultats positifs de détection d'évènement, selon deux ordres opposés de lecture des éléments dans chaque ligne L. Une telle donnée numérique d'évènement est une indication de la portion minimale du champ d'observation dans laquelle s'est produit au moins un évènement. Un tel mode de lecture minimise le nombre d'opérations qui sont exécutées et la quantité de données d'image à traiter, tout en fournissant une information suffisante sur la présence et la localisation d'évènements. De préférence, les deux ordres de lecture des éléments 11 à l'intérieur de chaque ligne L procèdent chacun progressivement à partir d'une extrémité de cette ligne jusqu'à l'autre extrémité. D'autres modes de lecture de chaque ligne peuvent être mis en oeuvre alternativement. En particulier, chaque ligne peut être découpée en plusieurs segments successifs, appelés blocs, et le mode de lecture FIL & LIL peut être mis en oeuvre à l'intérieur de chaque bloc.

L'aspect de l'invention qui est maintenant décrit est destiné à réduire la probabilité de fausse détection, en plus de la comparaison avec le seuil TH1 qui est effectuée au sein de chaque élément de détection de point d'image 11. Il consiste en un filtrage spatial des contenus des mémoires de sortie 16, qui est effectué pour chaque ligne L juste avant qu'elle soit lue selon le mode «rolling». Pour cela, l'unité de commande 20 peut comprendre un module de filtrage 23 (figure 2) qui est agencé pour filtrer spatialement les résultats binaires de détection d'évènements à l'intérieur d'un sous-ensemble de lignes L adjacentes qui inclut la ligne en cours de lecture. Lorsque les lignes L de la matrice sont lues une-à-une en parcourant progressivement la direction des colonnes C, de la première à la dernière ligne, le module 23 peut comprendre un ensemble de mémoires en files pour chaque colonne C de la matrice, de façon à permettre le filtrage en comparant les résultats binaires de détection d'évènements entre des éléments 11 voisins, pour une même trame qui est en cours d'acquisition. L'encodeur de colonnes 24 est alors connecté pour lire ces résultats binaires de détection d'évènements après que ceux-ci ont été filtrés. Un tel filtrage peut consister à ne conserver un résultat positif de détection d'évènement pour un élément de détection de point d'image en cours de traitement, que si le résultat est aussi positif pour un nombre fixé d'autres éléments de détection de points d'image à l'intérieur d'une zone prédéfinie autour du premier l'élément. Par exemple, un résultat positif de détection d'évènement qui est obtenu pour un élément de détection de point d'image n'est conservé que si l'un au moins des éléments qui lui sont voisins, selon la direction des lignes L ou celle des colonnes C, a aussi un résultat qui est positif. De façon particulièrement avantageuse, le module de filtrage 23 peut être incorporé dans le même substrat de circuit CMOS que le capteur d'image 10 et l'unité de commande 20. La colonne C et la ligne L dont les codes forment la donnée numérique d'évènement qui est transmise par l'unité de commande 20 à l'unité de traitement en temps réel 200, sont déterminées à partir des résultats binaires de détection d'évènements filtrés.

De façon générale, pour contrôler le fonctionnement en mode «rolling» et produire les données numériques d'évènements, l'unité de commande 20 comprend les composants suivants, en référence à la figure 2 :
21 : un séquenceur principal de production des données numériques d'évènements,
22 : un séquenceur de lignes pour la détection d'évènements,
23 : le module de filtrage déjà cité, qui est optionnel,
24 : l'encodeur de colonnes, pour produire les données numériques d'évènements, et
25 : une sortie numérique pour transmettre les données numériques d'évènements à l'unité de traitement en temps réel 200.

Ces composants 21 à 25 constituent la voie numérique de production de données d'image, qui est notée «DIGITAL» sur la figure 1.

Simultanément, l'unité de commande 20 comprend aussi les composants suivants (figure 2), pour constituer une voie analogique de production d'autres données d'image :
27 : un séquenceur principal d'acquisition d'images,
28 : un séquenceur-décodeur de lignes,
29 : un décodeur de colonnes,
30 : un module de lecture des lignes,
31 : un amplificateur des signaux électriques accumulés puis lus, et
32 : une sortie analogique pour transmettre les signaux électriques accumulés puis lus à l'unité de traitement différé 300.

L'unité de traitement différé 300 peut être connectée à la sortie analogique 32 du détecteur 100 directement, ou éventuellement par l'intermédiaire de l'unité 200.

La voie analogique est notée «ANALOG» sur la figure 1 et intervient parallèlement à la voie numérique. La voie analogique transmet à l'unité de traitement en temps différé 300 certains des signaux électriques accumulés, d'une façon qui sera décrite plus loin. La lecture de ces signaux dans les mémoires analogiques 13 est faite lors du même fonctionnement en mode «rolling» que la lecture des résultats binaires de détection d'évènements à partir des mémoires de sortie 16.

L'unité de traitement en temps réel 200 possède notamment les deux fonctions suivantes : filtrer les données numériques d'évènements qui sont transmises par le détecteur 100 via la sortie numérique 25 d'une part, et limiter la lecture des signaux électriques accumulés dans les mémoires 13 aux seules parties d'images qui présentent un intérêt.

Pour réaliser le filtrage, l'unité 200 peut comprendre une table de lecture 201 («look-up table» en anglais) qui répertorie ceux des éléments de détection de points d'image 11 qui sont défectueux. Une telle table 201 peut être mise-à-jour régulièrement d'après des tests appropriés qui sont réalisés sur la matrice du capteur d'image 10. Dans une première étape, l'unité 200 compare chaque donnée numérique d'évènement reçue au contenu de la table de lecture 201. Elle peut alors écarter certaines de ces données numériques d'évènements qui contiennent un nombre trop important d'éléments 11 défectueux.

Dans une deuxième étape, l'unité 200 peut écarter des données numériques d'évènements qui correspondent à des contenus d'image déjà identifiés comme étant des contenus parasites. De tels contenus parasites peuvent avoir été identifiés d'après des trames acquises antérieurement. Par exemple, cette identification de contenu parasite d'image peut être effectuée par l'unité de traitement en temps différé 300 qui sera décrite plus loin, et la zone de la matrice du capteur d'image 10 qui est concernée par ce contenu parasite peut être indiquée en retour par l'unité 300 à l'unité 200. Par exemple, des zones de réflexion lumineuse spéculaire à la surface de la Terre peuvent ainsi être rejetées lors d'une recherche d'impulsions lumineuses d'éclairs.

Une troisième étape du filtrage concerne le cas d'une nouvelle donnée numérique d'évènement qui correspond à une même zone de la matrice du capteur d'image 10 qu'une ou plusieurs données numériques d'évènements déjà produites lors de la même trame. Une telle concentration temporelle de données à traiter par l'ensemble du dispositif 1000 risque de provoquer une saturation de sa capacité de traitement. L'unité 200 ainsi que le détecteur 100 pour la lecture des mémoires analogiques 13 sont plus particulièrement exposés au risque de saturation. Notamment, le nombre de données numériques d'évènements qui correspondent à des parties du champ d'observation qui ont un faible intérêt, peut être limité au profit d'autres parties du champ d'observation pour lesquelles l'intérêt est supérieur. Par exemple, la capacité à détecter un grand nombre d'évènements peut être réservée en priorité pour des zones de la surface terrestre à forte densité de population, par rapport à des zones d'océan ou de désert. Pour éviter de telles saturations de la capacité de traitement, le nombre de données numériques d'évènements qui sont produites pour chaque trame, peut être limité à un nombre maximal. Ce nombre maximal peut concerner une zone réduite de la matrice du capteur d'image 10, et peut dépendre de la nature du contenu d'image qui a été identifié pour cette zone de matrice lors des trames acquises antérieurement. Les zones de matrice qui sont concernées par de telles limites pour la concentration de données numériques d'évènements peuvent encore être retournées par l'unité 300 à l'unité 200, avec les valeurs correspondantes du nombre maximal.

Dans une quatrième étape, l'unité 200 effectue une corrélation entre les données numériques d'évènements qui sont produites pour une même trame. Une telle corrélation est de nature spatiale, afin de distinguer entre des évènements qui sont détectés simultanément. Pour cela, et pour chaque trame qui est acquise, l'unité 200 regroupe dans une même fenêtre des données numériques d'événements qui ont été produites pour cette trame et qui correspondent à des segments de lignes L qui sont contigus dans la matrice. Ainsi, chaque fenêtre contient tous les éléments de détection de points d'image 11 qui ont produit des résultats positifs de détection d'évènements, à condition qu'ils appartiennent à des segments de lignes adjacents entre eux. Eventuellement, plusieurs fenêtres peuvent être déterminées ainsi dans une même trame, si les éléments 11 aux résultats positifs de détection d'évènements apparaissent regroupés dans des zones disjointes de la matrice du capteur d'image 10.

Ces fenêtres, qui caractérisent des parties connexes à l'intérieur de la matrice du capteur d'image 10, sont retransmises en temps réel au détecteur 100, via des entrées spécifiques 26L et 26C de ce dernier. L'entrée 26L transmet des coordonnées de lignes des fenêtres, et aboutit au séquenceur-décodeur de lignes 28. Simultanément, l'entrée 26C transmet des coordonnées de colonnes des fenêtres, et aboutit au décodeur de colonnes 29. De cette façon la lecture des mémoires analogiques 13 peut être limitée aux seuls éléments de détection de points d'image 11 qui sont contenus dans ces fenêtres. Les signaux électriques accumulés qui sont lus sont alors transmis par la sortie numérique 32 à l'unité de traitement différé 300. Pour qu'une telle limitation du fonctionnement d'imagerie soit possible, l'unité 200 doit déterminer et transmettre les coordonnées des fenêtres au détecteur 100 avant que l'acquisition de la trame suivante ait provoqué une ré-écriture dans les mémoires analogiques 13. Ce fonctionnement en temps réel de l'unité 200 par rapport à l'acquisition continue des lignes par le détecteur 100 est possible parce que les opérations qui sont réalisées par l'unité 200 sont de nature numérique, et donc très rapides. Ces opérations sont réalisées en une durée plus courte que la période d'acquisition d'une trame. Ainsi, les contenus d'image qui sont lus dans les mémoires 13 sont cohérents avec les fenêtres de lecture qui sont utilisées. Pour cette raison, l'unité 200 est notée «REAL-TIME PROCESS» sur la figure 1. De cette façon, pour chaque événement qui est détecté par la voie numérique, la voie analogique fournit une série de portions d'images qui sont limitées à cet événement, à la fois spatialement par rapport à l'étendue de chaque évènement et dans le temps par rapport à sa durée.

Dans une cinquième étape, l'unité 200 recherche des superpositions entre des fenêtres qui ont été déterminées pour des trames successives. Lorsque deux fenêtres de trames successives présentent un recouvrement, même partiel, elles sont répertoriées comme correspondant à un même évènement commun qui se prolonge sur les deux trames. Toutes les données numériques d'événement à l'origine des deux fenêtres sont alors reliées au même évènement commun. A l'inverse, lorsqu'une fenêtre qui est déterminée pour une nouvelle trame ne présente aucun recouvrement avec une fenêtre déterminée pour la trame qui a été acquise juste auparavant, l'évènement correspondant est répertorié, ou déclaré, comme nouvel évènement. Les données numériques d'évènement à l'origine de la fenêtre sont alors reliées à ce nouvel événement.

Un tel fonctionnement de l'unité de traitement en temps réel 200 peut être obtenu par une programmation appropriée d'un circuit de traitement vidéo, à la portée de l'Homme du métier.

L'unité de traitement différé 300 réalise un traitement pour chaque évènement déclaré. Pour cela, elle est connectée en entrée à l'unité 200 pour recevoir les coordonnées des fenêtres déterminées dans chaque trame, en liaison avec les évènements déclarés. Elle est aussi connectée en entrée au détecteur 100 pour recevoir les signaux électriques accumulés par les éléments de détection de points d'image 11 des fenêtres. De préférence, ces signaux peuvent être numérisés par l'unité 300.

Un premier traitement possible par l'unité 300 peut consister à retrancher à chaque signal individuel d'élément 11, une intensité de fond d'image qui est applicable au même élément 11. Le résultat de cette différence représente une intensité élémentaire d'événement pour l'élément 11 concerné. Plusieurs méthodes peuvent être utilisées pour obtenir l'intensité de fond d'image à utiliser pour un élément 11 identifié. L'une des plus simples consiste à utiliser le signal électrique d'accumulation d'un autre élément 11 voisin de l'élément identifié. Une méthode alternative consiste à utiliser le signal électrique d'accumulation de l'élément 11 identifié lui-même, qui est mémorisé avec un résultat binaire de détection d'évènement qui est de nouveau négatif pour la première fois. La lecture de signaux électriques d'accumulation pour constituer les intensités de fond d'image à utiliser peut être commandée puis traitée par le même canal que celui de la lecture des éléments de détection de points d'image 11 dans chaque fenêtre. Elle peut être obtenue notamment par une programmation appropriée de l'unité de commande 20.

Un deuxième traitement possible réalisé par l'unité 300 peut consister à additionner toutes les intensités élémentaires d'événement qui sont relatives au même évènement. Une telle somme est effectuée pour chaque trame, pour tous les éléments 11 qui sont à l'intérieur de la fenêtre qui a été déterminée pour l'évènement dans cette trame, puis pour toutes les trames qui contiennent une fenêtre pour cet évènément. Le résultat de cette somme constitue une caractérisation de l'intensité totale de l'évènement.

Enfin, un troisième traitement possible réalisé par l'unité 300 peut être un filtrage supplémentaire, d'après l'intensité totale qui a été obtenue pour chaque évènement. Cette intensité totale peut être comparée à une valeur minimale notée TH2, pour ne retenir que les évènements dont les intensités totales sont supérieures à la valeur TH2.

Dans la figure 2, les références 301, 302, 303 et 304 désignent symboliquement les trois traitements qui viennent d'être décrits pour l'unité 300, ainsi qu'une sortie finale des évènements filtrés selon leurs intensités totales respectives. Eventuellement, l'unité 300 peut effectuer des traitements supplémentaires, comme la détermination d'une étendue spatiale moyenne de chaque évènement, ou des regroupements d'événements selon des critères de proximité spatio-temporelle pour en déduire des mesures statistiques de regroupements par salves. De façon générale, les traitements de données qui sont réalisés par l'unité 300 sont différés par rapport à l'acquisition des trames en mode «rolling», par opposition au fonctionnement en temps réel de l'unité 200. Pour cette raison, l'unité 300 est notée «DELAYED PROCESS» sur la figure 1.

La figure 4 illustre l'application du dispositif d'imagerie sélective 1000 qui vient d'être décrit à la détection d'éclairs dans l'atmosphère terrestre. Pour cela, le dispositif 1000 est embarqué à bord d'un satellite 1001 qui est placé en orbite autour de la Terre. Les significations des autres références sont indiquées maintenant :
T : la Terre,
A : l'atmosphère terrestre,
E : des éclairs se produisant dans l'atmosphère terrestre,
F : le champ d'observation du dispositif 1000,
R : un rayon lumineux qui est produit par un éclair et qui participe à la détection de cet éclair.

Le satellite 1001 peut être géostationnaire. Dans ce cas, le champ d'observation F peut posséder une ouverture angulaire qui est comprise entre 14° et 20°, pour que chaque trame contienne une image complète de la face de la Terre T qui est tournée vers le satellite 1001. En outre, dans un mode de réalisation pratique, la matrice du capteur d'image 10 peut comprendre quatre matrices élémentaires chacune de 1024 x 1024 éléments de détection de points d'image 11. Ces matrices élémentaires sont alors agencées optiquement pour reconstituer le champ d'observation total F avec une section qui est carrée.

L'intensité totale d'évènement qui est calculée par l'unité 300 est alors l'intensité lumineuse de chaque éclair. Eventuellement, pour éviter de façon plus efficace encore que des nuages qui seraient rendus brillants par le soleil ne soient comptabilisés comme évènements, un filtrage supplémentaire peut être réalisé par l'unité 300, en fonction de la durée de chaque évènement qui est mesurée comme un nombre de trames successives. Une durée maximale peut ainsi être imposée pour les évènements sélectionnés qui sont transmis par la sortie finale 304.

Il est entendu que la présente invention concerne un détecteur et un dispositif d'imagerie sélective qui permettent de détecter des évènements aléatoires pouvant se produire par salves, en même temps que recueillir des images de ces évènements. Bien que la détection d'éclairs dans l'atmosphère terrestre ait été donnée comme exemple d'application de l'invention, un détecteur et un dispositif d'imagerie sélective conformes à l'invention peuvent être utilisés pour d'autres applications, telles que des applications de sécurité d'accès à des locaux, des applications de surveillance de trafic routier, etc.

Enfin, il est rappelé que le détecteur à fonction d'imagerie sélective 100 constitue en lui-même un aspect de l'invention, y compris lorsqu'il est séparé des unités 200 et 300.

## Revendications

1. Détecteur à fonction d'imagerie sélective (100), comprenant :
- un capteur d'image (10), comprenant lui-même un ensemble d'éléments de détection de points d'image (11) disposés à des intersections de lignes et de colonnes d'une matrice du capteur d'image ;
- une unité de commande (20) adaptée pour contrôler un fonctionnement du capteur d'image selon un mode continu de lecture ligne-à-ligne ;
- des entrées de sélection de fenêtres (26L, 26C) ;
- une sortie numérique (25) ; et
- une sortie analogique (32),
dans lequel la matrice du capteur d'image (10) comprend au moins 1000 lignes et au moins 1000 colonnes d'éléments de détection de points d'image (11), et le détecteur (100) est adapté pour balayer successivement toutes les lignes de ladite matrice selon une fréquence de trame supérieure ou égale à 2 kHz ;
et dans lequel chaque élément de détection de point d'image (11) comprend les composants suivants, à l'intérieur du capteur d'image (10) et séparément des autres éléments de détection de points d'image :
- un composant photosensible (12) adapté pour accumuler un signal électrique pendant une durée d'intégration en fonction d'une intensité lumineuse reçue par ledit composant photosensible ;
- au moins une mémoire analogique (13) adaptée pour mémoriser le signal électrique accumulé par le composant photosensible ;
- un système de soustraction (14) agencé pour produire un signal différentiel correspondant à une différence entre deux signaux électriques accumulés par le composant photosensible pendant deux durées d'intégration successives ;
- un système comparateur (15) adapté pour comparer le signal différentiel avec un seuil de détection, et pour produire un résultat binaire de détection d'événement ; et
- une mémoire de sortie (16), adaptée pour stocker le résultat binaire de détection d'événement ;
l'unité de commande (20) étant adaptée pour lire les mémoires de sortie (16) de certains au moins des éléments de détection de points d'image (11) appartenant à une même ligne de la matrice du capteur d'image (10), successivement pour chaque ligne,
et pour déterminer, lorsqu'au moins un résultat binaire de détection d'évènement est positif pour l'un des éléments de détection de points d'image (11) de ladite ligne, la colonne de la matrice du capteur d'image (10) à laquelle appartient ledit élément de détection de point d'image au résultat positif de détection d'évènement,
des codes utilisés pour caractériser ladite colonne et ladite ligne dans la matrice du capteur d'image (10) formant une donnée numérique d'évènement transmise par la sortie numérique (25) ;
et l'unité de commande (20) étant adaptée en outre pour lire la mémoire analogique (13) de certains au moins des éléments de détection de points d'image (11) appartenant à une fenêtre sélectionnée dans la matrice du capteur d'image (10) au moyen de coordonnées reçues par les entrées de sélection de fenêtres (26L, 26C), et pour transmettre les signaux électriques accumulés, mémorisés puis lus par la sortie analogique (32),
**caractérisé en ce que** l'unité de commande (20) comprend en outre un module de filtrage (23), agencé pour filtrer spatialement les résultats binaires de détection d'évènements à l'intérieur d'un sous-ensemble de plusieurs lignes adjacentes dans la matrice du capteur d'image (10) et comprenant la ligne en cours de lecture,
et la colonne dont le code contribue à la donnée numérique d'évènement transmise par la sortie numérique (25) étant déterminée à partir des résultats binaires de détection d'évènements filtrés.

2. Détecteur selon la revendication 1. dans lequel l'unité de commande (20) est adaptée en outre pour déterminer uniquement les colonnes respectives d'un premier et d'un dernier élément de détection de point d'image (11) aux résultats positifs de détection d'événement, selon deux ordres opposés de lecture des éléments de détection de points d'image dans chaque ligne.

3. Détecteur selon l'une quelconque des revendications précédentes, adapté en outre pour mesurer pendant le fonctionnement en mode continu de lecture ligne-à-ligne, une intensité d'un fond d'image à partir de lectures des mémoires analogiques (13) de certains au moins des éléments de détection de points d'image (11), des mesures de fond d'image formant un échantillonnage représentatif de toute la matrice du capteur d'image (10) étant répétées avec une fréquence d'actualisation de fond d'image qui est inférieure à un centième d'une fréquence de balayage de toutes les lignes de ladite matrice selon le mode continu de lecture ligne-ligne.

4. Détecteur selon la revendication 3, adapté de sorte que la fréquence d'actualisation de fond d'image soit supérieure ou égale à 0,5 Hz.

5. Dispositif d'imagerie sélective (1000) comprenant :
- un détecteur à fonction d'imagerie sélective (100) selon l'une quelconque des revendications précédentes ; et
- une unité de traitement en temps réel de données d'image (200), connectée en entrée à la sortie numérique (25) du détecteur à fonction d'imagerie sélective (100), et en sortie aux entrées de sélection de fenêtres (26L, 26C) dudit détecteur à fonction d'imagerie sélective,
l'unité de traitement en temps réel (200) étant adaptée pour exécuter les opérations suivantes en temps réel par rapport au fonctionnement en mode continu de lecture ligne-à-ligne du détecteur à fonction d'imagerie sélective (100) :
- recevoir des données numériques d'évènements à partir de la sortie numérique (25) du détecteur à fonction d'imagerie sélective (100) ;
- filtrer les données numériques d'événements reçues ;
- déterminer des fenêtres à partir des données numériques d'évènements, de sorte que chaque fenêtre contienne des éléments de détection de points d'image (11) aux résultats positifs de détection d'événement, qui appartiennent à des segments de lignes adjacents entre eux dans la matrice du capteur d'image (10) ; et
- transmettre des coordonnées des fenêtres aux entrées de sélection de fenêtres (26L, 26C) du détecteur à fonction d'imagerie sélective (100), pour les données numériques d'évènements filtrées.

6. Dispositif selon la revendication 5, dans lequel l'unité de traitement en temps réel (200) est adaptée pour filtrer les données numériques d'évènements reçues selon l'un au moins des critères suivants :
/i/ une donnée numérique d'évènement est validée si elle contient un nombre d'éléments de détection de points d'image (11) identifiés comme étant défectueux, inférieur à une limite maximale, sinon la donnée numérique d'évènement est abandonnée ;
/ii/ une donnée numérique d'évènement est validée si elle ne contient pas d'éléments de détection de points d'image (11) ayant détecté antérieurement un contenu d'image répertorié comme étant un contenu parasite, sinon la donnée numérique d'évènement est abandonnée ;
/iii/ une donnée numérique d'évènement est validée si un nombre de données numériques d'évènements obtenues pour une zone de la matrice à laquelle correspond ladite donnée numérique d'évènement, et pour une même séquence du balayage des lignes de la matrice dans le fonctionnement continu de lecture ligne-à-ligne, ne dépasse pas un nombre maximal fixé pour ladite zone de matrice, sinon la donnée numérique d'évènement est abandonnée ;
/iv/ déclarer un nouvel événement pour chaque fenêtre qui est déterminée pour une nouvelle séquence du balayage des lignes de la matrice dans le fonctionnement en mode continu de lecture ligne-à-ligne, et qui ne présente pas de recouvrement avec une fenêtre déterminée lors de la séquence précédente de balayage, et relier une nouvelle donnée numérique d'évènement participant à la fenêtre sans recouvrement audit nouvel événement ; et
/v/ relier une nouvelle donnée numérique d'évènement à un évènement déjà déclaré, si ladite nouvelle donnée numérique d'événement correspond à au moins un élément de détection de point d'image (11) qui appartient à la fenêtre déterminée lors de la séquence précédente de balayage des lignes de la matrice dans le fonctionnement en mode continu de lecture ligne-à-ligne, pour ledit évènement déjà déclaré.

7. Dispositif selon la revendication 5 ou 6, dans lequel le détecteur à fonction d'imagerie sélective (100) est conforme à la revendication 4, et ledit dispositif comprend en outre une unité de traitement différé de données d'image (300), ladite unité de traitement différé étant connectée en entrée d'une part à l'unité de traitement en temps réel (200) pour recevoir les coordonnées de fenêtres, et d'autre part à la sortie analogique (32) du dispositif à fonction d'imagerie sélective (100),
l'unité de traitement différé (300) étant adaptée pour soustraire (301), pour chaque élément de détection de point d'image (11) qui appartient à une fenêtre, une intensité de fond d'image au signal électrique accumulé pour ledit élément de détection de point d'image, de façon à obtenir une intensité élémentaire d'évènement.

8. Dispositif selon les revendications 6 et 7, dans lequel l'unité de traitement différé (300) est adaptée en outre pour exécuter les opérations suivantes pour chaque évènement déclaré :
- sommer (302) les intensités élémentaires d'événement obtenues pour tous les éléments de détection de points d'image (11) qui appartiennent aux fenêtres dudit évènement déclaré, et pour les séquences successives de balayage des lignes de la matrice dans le fonctionnement en mode continu de lecture ligne-à-ligne, de façon à obtenir une intensité totale d'événement ; et
- comparer (303) l'intensité totale d'évènement à un seuil de sélection, de façon à sélectionner l'évènement si ladite intensité totale d'événement est supérieure au seuil de sélection, et sinon à rejeter l'évènement.

9. Dispositif selon la revendication 8, dans lequel le capteur d'image (10) est sensible pour un rayonnement ayant une longueur d'onde comprise entre 0,6 µm et 1 µm.

10. Dispositif selon la revendication 8 ou 9, formant un dispositif de détection d'éclairs.

11. Procédé de détection d'éclairs comprenant les étapes suivantes :
- embarquer un dispositif d'imagerie sélective (1000) selon la revendication 10, à bord d'un satellite terrestre (1001) ;
- orienter un champ d'observation du dispositif (1000) vers une partie d'atmosphère terrestre, sorte que le capteur d'image (10) reçoive un rayonnement produit par un éclair survenant dans la partie d'atmosphère terrestre ; et
- activer le dispositif d'imagerie sélective (1000) de sorte que l'éclair provoque un évènement sélectionné par l'unité de traitement différé (300).

12. Procédé selon la revendication 11, suivant lequel le satellite (1001) est géostationnaire, le champ d'observation possède une ouverture angulaire comprise entre 14° et 20°, et la matrice du capteur d'image (10) comprend quatre matrices élémentaires chacune de 1024 x 1024 éléments de détection de points d'image (11), les dites matrices élémentaires étant agencées optiquement pour reconstituer totalement le champ d'observation avec une section carrée.

## Patentansprüche

1. Detektor mit selektiver Bildgebungsfunktion (100), umfassend:
- einen Bildsensor (10), der seinerseits eine Anordnung von Bildpunkterkennungselementen (11), die an Schnittstellen von Zeilen und Spalten einer Matrix des Bildsensors angeordnet sind, umfasst;
- eine Steuereinheit (20), die gestaltet ist, um einen Betrieb des Bildsensors in einem kontinuierlichen zeilenweisen Lesemodus zu steuern;
- Eingänge zur Auswahl von Fenstern (26L, 26C);
- einen digitalen Ausgang (25); und
- einen analogen Ausgang (32),
wobei die Matrix des Bildsensors (10) zumindest 1.000 Zeilen und zumindest 1.000 Spalten von Bildpunkterkennungselementen (11) umfasst und der Detektor (100) gestaltet ist, um nacheinander alle Zeilen der Matrix mit einer Bildrate von 2 kHz oder mehr abzutasten;
und wobei jedes Bildpunkterkennungselement (11) innerhalb des Bildsensors (10) und getrennt von den anderen Bildpunkterkennungselementen die folgenden Komponenten umfasst:
- eine lichtempfindliche Komponente (12), die gestaltet ist, um ein elektrisches Signal während eines Integrationszeitraums entsprechend einer von der lichtempfindlichen Komponente empfangenen Lichtstärke zu akkumulieren;
- zumindest einen analogen Speicher (13), der gestaltet ist, um das von der lichtempfindlichen Komponente akkumulierte elektrische Signal zu speichern;
- ein Subtraktionssystem (14), das eingerichtet ist, um ein Differentialsignal zu erzeugen, das einer Differenz zwischen zwei elektrischen Signalen, die während zweier aufeinanderfolgender Integrationszeiträume von der lichtempfindlichen Komponente akkumuliert wurden, entspricht;
- ein Vergleichssystem (15), das gestaltet ist, um das Differentialsignal mit einem Erkennungsgrenzwert zu vergleichen und um ein binäres Ereigniserkennungsergebnis zu erzeugen; und
- einen Ausgangsspeicher (16), der gestaltet ist, um das binäre Ereigniserkennungsergebnis zu speichern;
wobei die Steuereinheit (20) gestaltet ist, um nacheinander für jede Zeile die Ausgangsspeicher (16) zumindest einiger Bildpunkterkennungselemente (11), die zu einer gleichen Zeile der Matrix des Bildsensors (10) gehören, zu lesen,
und um, wenn zumindest ein binäres Ereigniserkennungsergebnis für das eine der Bildpunkterkennungselemente (11) der Zeile positiv ist, die Spalte der Matrix des Bildsensors (10), zu der das Bildpunkterkennungselement zum positiven Ereigniserkennungsergebnis gehört, zu bestimmen,
wobei Codes, die zur Charakterisierung der Spalte und der Zeile in der Matrix des Bildsensors (10) verwendet werden, digitale Ereignisdaten bilden, die vom digitalen Ausgang (25) übertragen werden;
und wobei die Steuereinheit (20) gestaltet ist, um ferner den analogen Speicher (13) zumindest einiger Bildpunkterkennungselemente (11), die zu einem ausgewählten Fenster in der Matrix des Bildsensors (10) gehören, mit Hilfe von Koordinaten, die von den Fensterauswahleingängen (26L, 26C) empfangen wurden, zu lesen und um die gespeicherten und anschließend vom analogen Ausgang (32) gelesenen akkumulierten elektrischen Signale zu übertragen,
**dadurch gekennzeichnet, dass** die Steuereinheit (20) ferner ein Filtermodul (23) umfasst, das eingerichtet ist, um die binären Ereigniserkennungsergebnisse innerhalb einer Untergruppe mehrerer Zeilen, die in der Matrix des Bildsensors (10) benachbart sind und die Zeile, welche gerade gelesen wird, umfassen, räumlich zu filtern,
und wobei die Spalte, deren Code zu den digitalen Ereignisdaten beiträgt, die vom digitalen Ausgang (25) übertragen werden, anhand der gefilterten binären Ereigniserkennungsergebnisse bestimmt wird.

2. Detektor nach Anspruch 1, wobei die Steuereinheit (20) ferner gestaltet ist, um ausschließlich die jeweiligen Spalten eines ersten und eines letzten Bildpunkterkennungselements (11) zu positiven Ereigniserkennungsergebnissen in zwei zueinander entgegengesetzten Reihenfolgen zum Lesen der Bildpunkterkennungselemente in jeder Zeile zu bestimmen.

3. Detektor nach einem der vorangehenden Ansprüche, der ferner gestaltet ist, um während des Betriebs im kontinuierlichen zeilenweisen Lesemodus eine Hintergrundbildintensität durch Lesen der analogen Speicher (13) zumindest einiger der Bildpunkterkennungselemente (11) zu messen, wobei Hintergrundbildmessungen, die eine repräsentative Stichprobe der gesamten Matrix des Bildsensors (10) bilden, mit einer Hintergrundbildaktualisierungsfrequenz, die kleiner als ein Hundertstel einer Abtastfrequenz aller Zeilen der Matrix im kontinuierlichen zeilenweisen Lesemodus ist, wiederholt werden.

4. Detektor nach Anspruch 3, der so gestaltet ist, dass die Hintergrundbildaktualisierungsfrequenz größer als oder gleich 0,5 Hz ist.

5. Vorrichtung zur selektiven Bildgebung (1000), umfassend:
- einen Detektor mit selektiver Bildgebungsfunktion (100) nach einem der vorangehenden Ansprüche; und
- eine Einheit zur Echtzeitbearbeitung von Bilddaten (200), deren Eingang mit dem digitalen Ausgang (25) des Detektors mit selektiver Bildgebungsfunktion (100) und deren Ausgang mit den Fensterauswahleingängen (26L, 26C) des Detektors mit selektiver Bildgebungsfunktion verbunden sind,
wobei die Einheit zur Echtzeitbearbeitung (200) gestaltet ist, um in Echtzeit in Bezug auf den kontinuierlichen zeilenweisen Lesemodus des Detektors mit selektiver Bildgebungsfunktion (100) folgende Vorgänge auszuführen:
- Empfangen digitaler Ereignisdaten vom digitalen Ausgang (25) des Detektors mit selektiver Bildgebungsfunktion (100)
- Filtern der empfangenen digitalen Ereignisdaten;
- Bestimmen von Fenstern anhand der digitalen Ereignisdaten, sodass jedes Fenster Bildpunkterkennungselemente (11) zu positiven Ereigniserkennungsergebnissen enthält, die zu Zeilensegmenten, die in der Matrix des Bildsensors (10) zueinander benachbart sind, gehören; und
- Übertragen von Fensterkoordinaten an die Fensterauswahleingänge (26L, 26C) des Detektors mit Bildgebungsfunktion (100) für die gefilterten digitalen Ereignisdaten.

6. Vorrichtung nach Anspruch 5, wobei die Einheit zur Echtzeitbearbeitung (200) gestaltet ist, um die empfangenen digitalen Ereignisdaten nach zumindest einem der folgenden Kriterien zu filtern:
/i/ digitale Ereignisdaten werden validiert, wenn sie eine Anzahl an als defekt identifizierten Bildpunkterkennungselementen (11) enthalten, die kleiner als eine Höchstgrenze ist, andernfalls werden die digitalen Ereignisdaten verworfen;
/ii/ digitale Ereignisdaten werden validiert, wenn sie keine Bildpunkterkennungselemente (11) enthalten, die zuvor einen als parasitären Inhalt gelisteten Bildinhalt erkannt haben, andernfalls werden die digitalen Ereignisdaten verworfen;
/iii/ digitale Ereignisdaten werden validiert, wenn eine Anzahl digitaler Ereignisdaten, die für einen Matrixbereich, dem die betreffenden digitalen Ereignisdaten entsprechen, und für ein und dieselbe Abtastsequenz der Matrixzeilen im kontinuierlichen zeilenweisen Lesebetrieb erhalten wurden, eine bestimmte Maximalanzahl für den Matrixbereich nicht überschreitet, andernfalls werden die digitalen Ereignisdaten verworfen;
/iv/ Erklären eines neuen Ereignisses für jedes Fenster, das für eine neue Abtastsequenz der Matrixzeilen im Betrieb des kontinuierlichen zeilenweisen Lesemodus bestimmt wird und das keine Überdeckung mit einem bei der vorherigen Abtastsequenz bestimmten Fenster aufweist, und Verbinden neuer digitaler Ereignisdaten, die am Fenster ohne Überdeckung beteiligt sind, mit dem neuen Ereignis; und
/v/ Verbinden neuer digitaler Ereignisdaten mit einem bereits erklärten Ereignis, wenn die neuen digitalen Ereignisdaten zumindest einem Bildpunkterkennungselement (11) entsprechen, das zu dem während der vorherigen Abtastsequenz der Matrixzeilen im Betrieb des kontinuierlichen zeilenweisen Lesemodus bestimmten Fenster gehört, für das bereits erklärte Ereignis.

7. Vorrichtung nach Anspruch 5 oder 6, wobei der Detektor mit selektiver Bildgebungsfunktion (100) dem Anspruch 4 entspricht und die Vorrichtung ferner eine Einheit zur zeitlich versetzten Bearbeitung von Bilddaten (300) umfasst, wobei die Einheit zur zeitlich versetzten Bearbeitung mit ihrem Eingang einerseits mit der Einheit zur Echtzeitbearbeitung (200) zum Empfangen der Fensterkoordinaten und andererseits mit dem analogen Ausgang (32) der Vorrichtung mit selektiver Bildgebungsfunktion (100) verbunden ist,
wobei die Einheit zur zeitlich versetzten Bearbeitung (300) gestaltet ist, um für jedes zu einem Fenster gehörende Bildpunkterkennungselement eine Hintergrundbildintensität von dem akkumulierten elektrischen Signal für das Bildpunkterkennungselement zu subtrahieren (301), um eine elementare Ereignisintensität zu erhalten.

8. Vorrichtung nach den Ansprüchen 6 und 7, wobei die Einheit zur zeitlich versetzten Bearbeitung (300) gestaltet ist, um ferner für jedes erklärte Ereignis die folgenden Vorgänge auszuführen:
- Summieren (302) der elementaren Ereignisintensitäten, die für alle zu den Fenstern des erklärten Ereignisses gehörenden Bildpunkterkennungselemente (11) und für die darauffolgenden Abtastsequenzen der Matrixzeilen im Betrieb des kontinuierlichen zeilenweisen Lesemodus erhalten wurden, um eine Ereignisgesamtintensität zu erhalten; und
- Vergleichen (303) der Ereignisgesamtintensität mit einem Auswahlgrenzwert, um das Ereignis auszuwählen, wenn die Ereignisgesamtintensität über dem Auswahlgrenzwert liegt, bzw. um andernfalls das Ereignis abzulehnen.

9. Vorrichtung nach Anspruch 8, wobei der Bildsensor (10) gegenüber einer Strahlung mit einer Wellenlänge von 0,6 pm bis 1 pm empfindlich ist.

10. Vorrichtung nach Anspruch 8 oder 9, die eine Blitzerkennungsvorrichtung bildet.

11. Blitzerkennungsvorrichtung, umfassend folgende Schritte:
- Mitführen einer Vorrichtung zur selektiven Bildgebung (1000) nach Anspruch 10 an Bord eines Erdsatelliten (1001);
- Ausrichten eines Beobachtungsfeldes der Vorrichtung (1000) in Richtung eines Bereichs der Erdatmosphäre, sodass der Bildsensor (10) eine von einem im Bereich der Erdatmosphäre auftretenden Blitz erzeugte Strahlung empfängt; und
- Aktivieren der Vorrichtung zur selektiven Bildgebung (1000) sodass der Blitz ein von der Einheit zur zeitlich versetzten Bearbeitung (300) ausgewähltes Ereignis auslöst.

12. Verfahren nach Anspruch 11, wobei der Satellit (1001) geostationär ist, das Beobachtungsfeld über eine Winkelöffnung von 14° bis 20° verfügt und die Matrix des Bildsensors (10) vier elementare Matrizen mit jeweils 1.024 x 1.024 Bildpunkterkennungselementen (11) umfasst, wobei die elementaren Matrizen optisch so eingerichtet sind, dass sie das Beobachtungsfeld mit einem quadratischen Querschnitt vollständig rekonstruieren.

## Claims

1. Detector (100) with selective imaging function, comprising:
- an image sensor (10), itself comprising a set of pixel detection elements (11) disposed at intersections of rows and columns of a matrix of the image sensor,
- a control unit (20) adapted to control operation of the image sensor in a continuous row-by-row reading mode,
- window selection inputs (26L, 26C),
- a digital output (25), and
- an analog output (32),
wherein the matrix of the image sensor (10) comprises at least 1000 rows and at least 1000 columns of pixel detection elements (11) and the detector (100) is adapted to scan successively all the rows of said matrix at a frame frequency greater than or equal to 2 kHz,
and wherein each pixel detection element (11) comprises the following components, inside the image sensor (10) and separate from the other pixel detection elements:
- a photosensitive component (12) adapted to accumulate an electrical signal during an integration period as a function of a light intensity received by said photosensitive component,
- at least one analog memory (13) adapted to store the electrical signal accumulated by the photosensitive component,
- a subtractor system (14) adapted to produce a differential signal corresponding to a difference between two electrical signals accumulated by the photosensitive component during two successive integration periods,
- a comparator system (15) adapted to compare the differential signal with a detection threshold and to produce an event detection binary result, and
- an output memory (16) adapted to store the event detection binary result,
the control unit (20) being adapted to read the output memories (16) of at least some of the pixel detection elements (11) belonging to a same row of the matrix of the image sensor (10), successively for each row,
and to determine, if at least one event detection binary result is positive for one of the pixel detection elements (11) of said row, the column of the matrix of the image sensor (10) to which belongs said pixel detection element producing the positive event detection result,
codes used to characterise said column and said row in the matrix of the image sensor (10) forming an event digital datum transmitted via the digital output (25),
and the control unit (20) being further adapted to read the analog memory (13) of at least some of the pixel detection elements (11) belonging to a window selected in the matrix of the image sensor (10) by means of coordinates received by the window selection inputs (26L, 26C) and to transmit the accumulated electrical signals stored and then read via the analog output (32),
**characterised in that** the control unit (20) further includes a filter module (23) adapted to implement spatial filtering to the event detection binary results within a subset of a plurality of adjacent rows in the matrix of the image sensor (10) including the row being read,
and the column the code of which contributes to the event digital datum transmitted via the digital output (25) being determined from the filtered event detection binary results.

2. Detector according to claim 1, wherein the control unit (20) is further adapted to determine only the respective columns of first and last pixel detection elements (11) producing the positive event detection results in accordance with two opposite orders for reading the pixel detection elements in each row.

3. Detector according to either of the preceding claims, further adapted to measure during operation in continuous row-by-row reading mode, an intensity of an image background by reading the analog memory (13) of at least some of the pixel detection elements (11), image background measurements forming a representative sample of the whole of the matrix of the image sensor (10) being repeated with an image background updating frequency that is less than one hundredth of a frequency for scanning all the rows of said matrix in the continuous row-by-row reading mode.

4. Detector according to claim 3, wherein the image background updating frequency is greater than or equal to 0.5 kHz.

5. Selective imaging device (1000) comprising:
- a detector (100) according to any one of the preceding claims, with a selective imaging function, and
- a unit (200) for real-time processing of image data having an input connected to the digital output (25) of the detector (100) with the selective imaging function, and an output connected to the window selection inputs (26L, 26C) of said detector with the selective imaging function,
the real-time processor unit (200) being adapted to execute the following operations in real time relative to the operation in continuous row-by-row reading mode of the detector (100) with the selective imaging function:
- receiving event digital data from the digital output (25) of the detector (100) with the selective imaging function,
- filtering the received event digital data,
- determining windows from the event digital data so that each window contains pixel detection elements (11) producing the positive event detection results that belong to adjacent row segments in the matrix of the image sensor (10), and
- transmitting coordinates of the windows to the window selection inputs (26L, 26C) of the detector (100) with the selective imaging function, for the filtered event digital data.

6. Device according to claim 5, wherein the real-time processor unit (200) is adapted to filter the received event digital data according to at least one of the following criteria:
/i/ an event digital datum is validated if it contains a number of pixel detection elements (11) identified as being defective, which is below a maximum limit, otherwise the event digital datum is abandoned,
/ii/ an event digital datum is validated if it does not contain pixel detection elements (11) that have previously detected an image content listed as being a spurious content, otherwise the event digital datum is abandoned,
/iii/ an event digital datum is validated if a quantity of event digital data obtained for an area of the matrix to which said event digital datum corresponds, and for the same sequence of scanning the rows of the matrix during operation in the continuous row-by-row reading mode does not exceed a maximum quantity set for said matrix area, otherwise the event digital datum is abandoned,
/iv/ declaring a new event for each window that is determined for a new sequence of scanning the rows of the matrix during operation in the continuous row-by-row reading mode, and that does not overlap a window determined during the preceding scanning sequence, and linking a new event digital datum contributing to the window with no overlap to said new event, and
/v/ linking a new event digital datum to an event already declared if said new event digital datum corresponds to at least one pixel detection element (11) that belongs to the window determined during the preceding sequence of scanning the rows of the matrix during operation in the continuous row-by-row reading mode for said event already declared.

7. Device according to claim 5 or 6, wherein the detector (100) with the selective imaging function is according to claim 4 and said device further comprises a unit (300) for delayed processing of image data, said delayed processor unit being connected at input on the one hand to the real-time processing unit (200) to receive the window coordinates, and on the other hand to the analog output (32) of the device (100) with the selective imaging function,
the delayed processing unit (300) being adapted, for each pixel detection element (11) that belongs to a window, to subtract (301) an image background intensity from the accumulated electrical signal for said pixel detection element so as to obtain an event elementary intensity.

8. Device according to claims 6 and 7, wherein the delayed processing unit (300) is further adapted to execute the following operations for each declared event:
- summing (302) the event elementary intensities obtained for all the pixel detection elements (11) that belong to the windows of said declared event, and for the successive sequences of scanning the rows of the matrix during operation in the continuous row-by-row reading mode so as to obtain an event total intensity, and
- comparing (303) the event total intensity to a selection threshold so as to select the event if said event total intensity is above the selection threshold, otherwise rejecting the event.

9. Device according to claim 8, wherein the image sensor (10) is sensitive to radiation having a wavelength between 0.6 µm and 1 µm.

10. Device according to claim 8 or 9, forming a lightning detector device.

11. Lightning detection method comprising the following steps:
- installing a selective imaging device (1000) according to claim 10 onboard an Earth satellite (1001),
- orienting an observation field of the device (1000) toward an Earth atmosphere portion so that the image sensor (10) receives radiation produced by lightning in the Earth atmosphere portion, and
- activating the selective imaging device (1000) so that the lightning causes an event selected by the delayed processing unit (300).

12. Method according to claim 11, wherein the satellite (1001) is a geostationary satellite, the observation field has an angular aperture between 14° and 20° and the matrix of the image sensor (10) comprises four base matrices each of 1024 x 1024 pixel detection elements (11), said base matrices being optically arranged to reconstitute totally the observation field with a square section.
